# EUROPEAN PATENT APPLICATION

(11) **EP 0 552 981 A1**
(43) Date of publication of application: **28.07.1993**
(21) Application number: 93300482.2
(22) Date of filing: 22.01.1993
(51) Int. Cl.: B65B 21/24, B65G 47/08

(54) **4/12 Packaging system**

(30) Priority: 24.01.1992 US 825264
(71) Applicant: Thiele Engineering Company, Minneapolis Minnesota 55435 (US)
(72) Inventor: Pan, Peter N.Y., Minnetonka, MN 55345 (US); Cheney, Ervin J., St. Louis Park, MN 55416 (US)
(74) Representative: Parr, Ronald Edward R.E. Parr & Co.

(57) **Abstract**

High speed packaging system where transverse lanes plow product across conveyors, and simultaneously separate product by selector bars (30,31) for movement into a bucketed conveyor (26). Multi-speed starwheel drives space and move product items in conjunction with the transverse lanes and selector bars. In addition, erected package sleeves parallel the movement of the grouped product items and are loaded into the sleeves by loading arms. Input lanes may be blocked and starwheel drive speeds changed to efficiently load the required number of product items.

## Description

This invention relates to method and apparatus for packaging articles to produce packs each containing a plurality of the articles, for example for loading multiple product units into sleeve type packages. In particular, though not exclusively, the invention relates to machines for the high speed loading of cans, bottles or similar cylindrical geometric articles into cartons, and the invention is particularly described herein with regard to that particular aspect of the invention.

In the prior art a multitude of apparatus has been proposed for loading packages with sets of individual product. In particular, the techniques for loading cardboard sleeve-type packages with cans or bottles are manifold.

Cans of beverage are commonly sold in cardboard 12-packs or 24-can cases. The package is normally a cardboard sleeve into which the cans or bottles have been slid from the end. The ends of the sleeve are then folded and glued to seal the individual products in place.

What is needed in order to speed up loading to meet today's production standards is a loader which can load different sets of cans.

According to a first apsect of the invention there is provided a method of packaging articles to produce packs each containing a plurality of the articles, characterised in that the method comprises:
(a) providing a plurality of streams of the articles;
(b) directing the streams at pre-determined speeds to a consolidation zone;
(c) in the consolidation zone consolidating the streams into a consolidated stream of articles;
(d) dividing the consolidated stream into a plurality of batches of said articles, each batch containing the number of articles required in the intended pack; and
(e) securing the batches in packaging material .

According to a second aspect of the invention there is provided apparatus (sometimes referred to herein as "system") suitable for use in the method according to the first aspect of the invention, the apparatus comprising:
a conveyor for said plurality of streams of articles;
a plurality of feeders to feed said streams at a pre-determined speed;
consolidation means to form said streams into a consolidated stream;
divider means to divide the consolidated stream into a plurality of batches of the articles; and
securement means to secure the respective batches as the desired packs.

In a preferred form, the present invention provides a high speed packaging system which is adjustable for loading and packaging of different numbers and/or different configurations of product, for example cylindrical objects, into cartons. Thus, for example, externally conveyed product is loaded onto a first conveyor where the product enters a plurality of conveyor lanes which angle inwardly and lead to a plurality of multi-speed starwheel feeders which space and feed product to a second conveyor system and third bucketed conveyor system. Product is conveyed transversely in its respective angled conveyor lane across the second conveyor, and transversely into the buckets of the third conveyor system to form rows of product along the third bucketed conveyor. A plurality of selector bars intercede at a set distance between the transversely moving rows of product to separate them into groups appropriate to the bucket size of the third conveyor. Separated sets of product then travel along a fourth conveyor system to be loaded into package sleeves. Any number of lanes and any spacing of selector bars can be used to load varying numbers of product items into appropriately sized package sleeves. Cartons are erected and placed on flights which parallel the flow of product which moves along the fourth conveyor. Loader arms position the product sets into the erected sleeves moving along the fourth conveyor. The sleeves are then sealed and glued.

According to one embodiment of the present invention, there is provided a packaging system including a first conveyor system with overlying and inwardly angled plurality of lanes leading to a plurality of starwheel feeders, continuing over a second conveyor system inboard of the plurality of starwheel feeders, and continuing over a third bucketed conveyor yet inboard of the second conveyor system. Selector bars align over and above the third bucketed conveyor system. A fourth conveyor system aligns with the third bucketed system to convey grouped product past down or missing product sensors and product count sensors. Loading arms are located adjacent to the fourth conveyor. A horizontal carton hopper, a rotary carton feed, an air frame carton erector and compression discharge belts locate parallel to the third bucketed conveyor and the fourth conveyor.

Preferred forms of the present invention include one or more of the following:
the use of starwheel feeders;
conveyor lanes transversing conveyor systems;
a bucketed conveyor;
separator bars for separating product into groups, which can be spaced from each other to separate different numbers of product;
multi-speed starwheels;
closely spaced flights for maximum speed and efficiency; and
adjustable flights for accommodation of various sized sleeve packages.

There are now described, by way of example and with reference to the accompanying drawings, preferred embodiments of the method and apparatus of the present invention.

In the drawings:
FIG. 1 illustrates a plan view of the packaging apparatus including starwheel feeders and a bucket conveyor;
FIG. 2 illustrates a top view of the starwheel feeders configured for a twelve-pack;
FIG. 3 illustrates a top view of the starwheel feeders configured for a six-pack;
FIG. 4 illustrates a clutch drive mechanism for driving the starwheel feeders;
FIG. 5 illustrates product being loaded into one of the buckets of the conveyor;
FIG. 6 illustrates a side view of the buckets;
FIG. 7 illustrates packaged product between aligned flight members; and
FIG. 8 illustrates packaged product between staggered flight members.

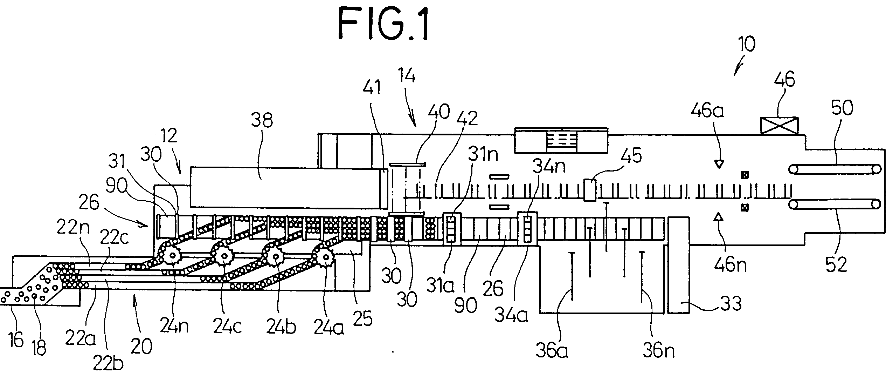

FIG. 1 illustrates a plan view of the packaging apparatus (10) (also referred to herein a "packaging system") mounted in framework tables (12 and 14). By appropriate modification the apparatus is suitable for producing packs of 4, 6, 8, 9 or 12 containers, for example cans, or other objects. For the sake of convenience the following description is with reference to cans.

An external conveyor (16) conveys cans (18) into a first conveyor (20) on framework table (12) having a plurality of conveyor lanes (22a-22n). Conveyor lanes (22a - 22n) angle inwardly to a plurality of starwheel feeders (24a - 24n) on the framework table (12), which uniformly and independently feed the cans (18) on to a second conveyor (25) located inboard of the starwheel feeders (24a -24n). High level sensors (not illustrated) are located upstream on the first conveyor (20) and low level sensors (27a - 27n) are strategically located on each conveyor lane (22a - 22n) which feed the rotary starwheel feeders (24a - 24n) , to control the speed of the machine and sequence lock-out the starwheel feeders (24a - 24n) in the event of unsufficient basket availability. Certain members of the lanes (22a - 22n) can be selectively used to allow starwheel feed for the required number of cans which subsequently align in a series of buckets (90) on a third bucketed conveyor (26) located inboard of the second conveyor (25). A plurality of like short or long can selector bars (30 and 31) are adjustable and divide the product (18) on the third bucketed conveyor (26) into the batches each having the desired number of rows. The cans continue along conveyor (26), are sensed by sensors (34a - 34n) and then proceed to a plurality of product loader arms (36a - 36n) which move product cartons on the framework table (14) as later discussed in detail.

A horizontal carton hopper (38) and rotary carton feeder (40) place unerected cartons (41) between conveyored flights (42) on the framework table (14), and they are erected by an air frame carton erector (44). Erected cartons (45) are conveyed past the loader arms (36a - 36n) where cans (18) are pushed into respective erected cartons. The flights (42) can, for example, be disposed on a fourth conveyor (32).

A plurality of sensors (31a - 31n) are disposed over and about the product flow on the conveyor (26) to detect downed or missing cans, whereupon a signal is sent so that a carton will not be erected for that particular product group. The cans (18) including the downed product item then proceed past the loader arms (36a - 36n) (which receive no loading signal) and to the end of the conveyor (26) where they are dumped into a reject chute (33). If the sensors (34a - 34n) determine that the required number of cans is not present in the area adjacent the loader arms (36a - 36n), the cans continue along and are not inserted into the erected cartons but are dumped into the reject chute (33). If the sensors (34a - 34n) determine that the proper number of cans is present but that a corresponding carton (45) is not erected or is not properly erected, then the loader arms (36a - 36n) will receive no loading signal; the cans will be transported to the end of the conveyor (26) where they will be dumped into reject chute (33). If a carton (45) has been dispensed from the horizontal carton hopper (38) but not erected by the airframe carton erector (44), it will not be glued and will be rejected at the discharge end of the machine. The cartons are closed subsequent to passing the loader arms (36a - 36n) and glue is applied from a glue gum system (46) including glue applicator orifices (46a - 46n). Compression discharge belts (50 and 52) deliver packed cartons to the end of the framework table (14).

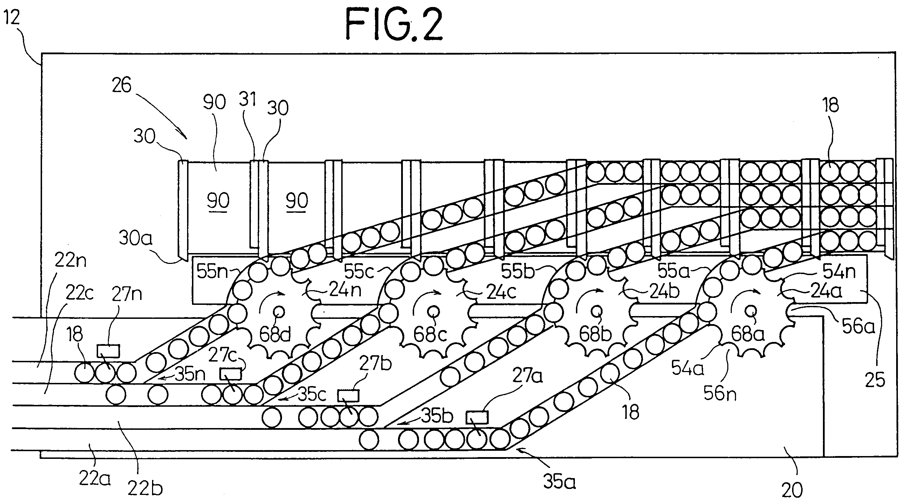

FIG. 2 illustrates a top view of the starwheel feeders (24a - 24n) for loading of "twelve pack" cans that is, packs each containing 12 cans. Cans (18) move along the conveyor lanes (22a - 22n), which align over the first conveyor (20), and are delivered to the starwheel feeders (24a - 24n) each of which incorporates a plurality of teeth (54a - 54n), semi-circular cutout areas (56a - 56n) aligning between the teeth (54a - 54n). The cans are captured between the cutout areas (56a - 56n) and the curved sides (55a - 55n) of the conveyor lanes (22a - 22n) are positioned with assistance of the second conveyor (25) into the buckets (90) on the third bucketed conveyor (26) while still remaining in their respective lanes. Conveyor lanes (22a - 22n) are continuous from the input side prior to the respective starwheel feeders (24a - 24n) along and about the starwheels feeders and continue over and along the second conveyor (25) and third bucketed conveyor (26).

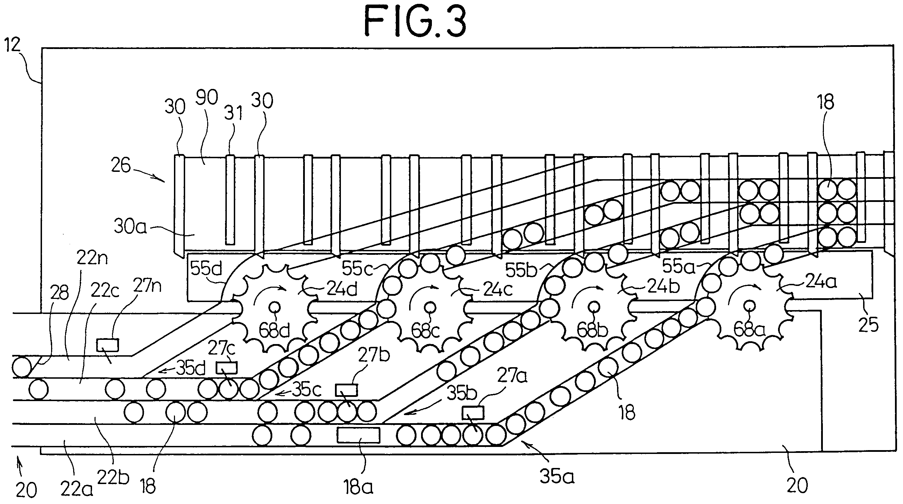

Can selector bars (30 and 31) are adjusted as illustrated to be closely disposed to each other so as to divide the cans into groups of three by intrusion of a beveled end (30a) of the can selector bar (30), firstly into conveyor lane (22n) and then into each of the remaining conveyor lanes (22c - 22a) containing cans. The can selector bars (30) are moved at the same speed as the second conveyor (25) and third bucketed conveyor (26) along each of the conveyor lanes (22a - 22n) until cans (18) in groups of three are aligned with each other in the buckets (90) on the third bucketed conveyor (26), where the cans are packaged as previously described. Pass-throughs (35a -35n) for downed cans are included in conveyor lanes (22a - 22n), respectively, beyond the points where each conveyor lane angles inwardly toward the starwheel feeders (24a - 24n). Thus, a downed can (18a) laying on its side (FIG. 3), will pass from the conveyor lane (22a) through the pass-through (35a).

Although twelve cans are illustrated as being separated and subsequently aligned to each other, a lesser or greater number of cans can be separated by varying the numbers of lanes, separation of selector bars and/or number of starwheels; the numbers of those features shown in the drawings shall not be construed as limiting the scope of the present invention.

FIG. 3 illustrates a top view of the starwheel feeders (24a - 24d) configured for loading of six-packs of cans. Conveyor lanes (22a - 22c) are open to allow product flow therethrough; lane (22d) is blocked by dead plate (28). Cans (18) are moved (as previously described) by starwheel feeders (24a, 24b and 24c) onto the third bucketed conveyor (26). Can selector bars (30 and 31) are spaced from each other by a distance appropriate to separate the cans under groups of two instead of groups of three as described earlier. The starwheel feeders are turned at different rates of speed for different numbers of product loading as described with reference to the following Figure.

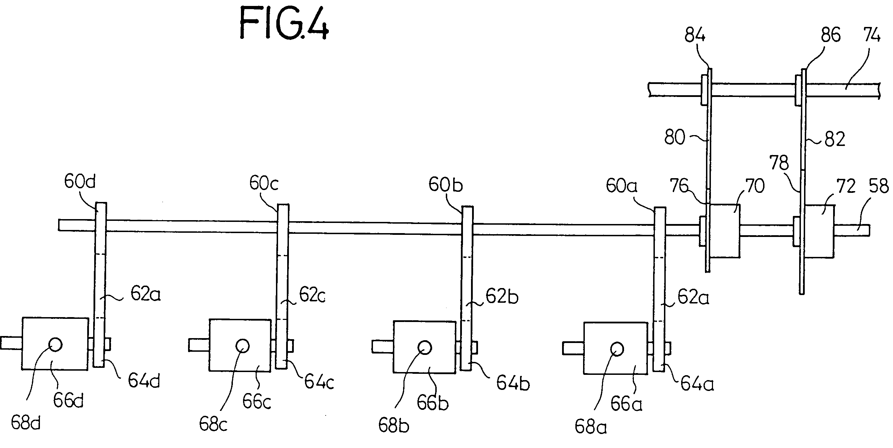

FIG. 4 illustrates a clutch drive mechamism for driving the starwheel feeders (24a-24d) at speeds compatible for loading of 12-packs. The mechanism is disposed below the starwheel feeders (24a - 24d) and beneath the framework table (12). A central drive shaft (58) is rotated to turn sprockets (60a - 60d) which in turn power chains (62a - 62d) and sprockets (64a - 64d) which are attached to angle drives (66a - 66d). Shafts (68a - 68d) extend upwardly to engage the starwheel feeders (24a - 24d) as illustrated in FIGS. 2 and 3. Clutches (70 and 72) connect to a powered drive shaft (74) via sprockets (76 and 78), chains (80 and 82), and sprockets (84 and 86), respectively. Sprocket (76) is appropriately toothed to load product cans (18) three at a time for twelve-pack loading, and sprocket (78) is appropriately toothed to load product cans (18) two at a time for six-pack loading. Each clutch (70 or 72) is appropriately engaged depending on the size of the package being loaded. The shaft (58) is turned faster for loading of twelve-pack product and slower for the loading of six pack product.

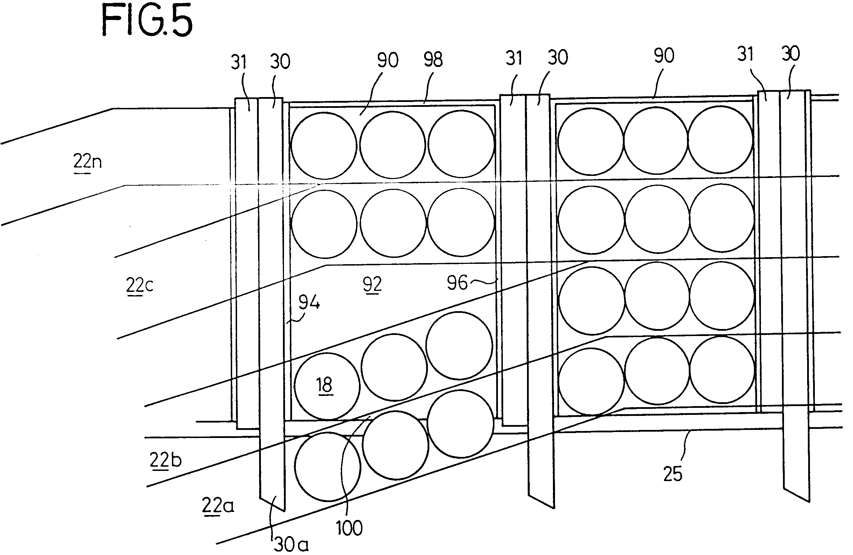

FIG. 5 illustrates cans (18) being loaded into buckets (90). A series of like buckets (90) are mounted between a series of like can selector bars (30) and (31). The buckets (90) include a planar bottom (92), opposing planar sides (94 and 96) and a planar end (98). An open end (100) of the bucket (90) accommodates cans moving through and from the conveyor lanes (22a - 22n) as they are separated by the can selector bars (30 and 31). The adjacent can separator bars (30 and 31) are attached by pins to each other.

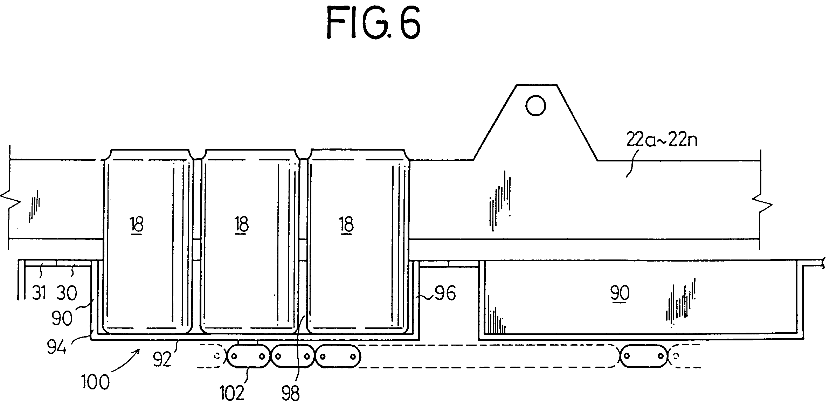

FIG. 6 illustrates a side view of the bucket (90). Illustrated in particular are cans (18) within the confines of the bucket (90) after entry through its open side (100). A plurality of parallel chain drives including chain (102) propel the buckets (90) along the framework table (12).

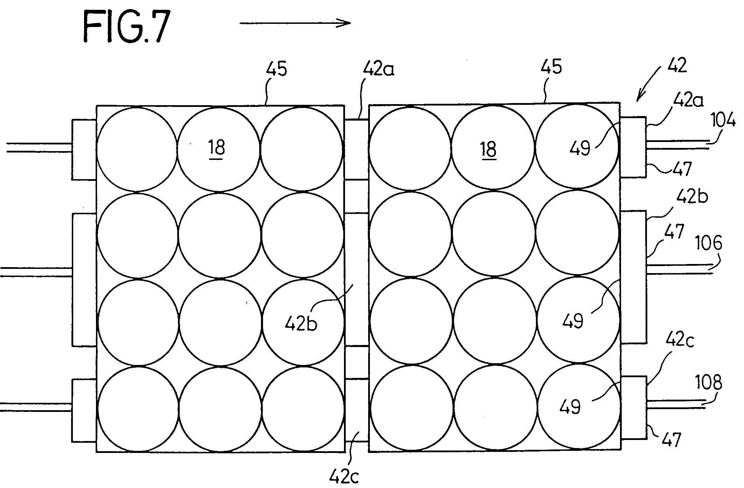

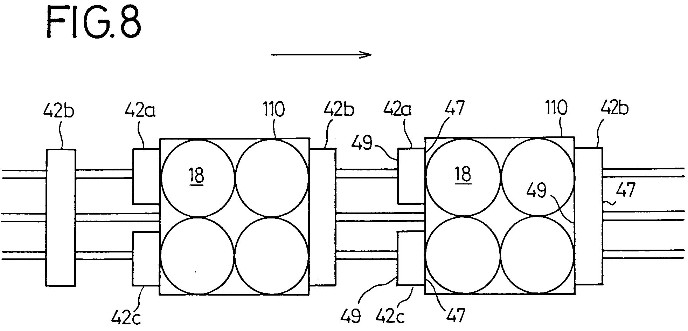

FIG. 7 illustrates cans (18) in cartons (45) between flight members (42). The flight members include a plurality of separate divided flight members (42a, 42b, 42c) each having a leading surface (47) and a trailing surface (49), aligned across the framework table (14). Each of the divided flight members are driven in unison by separate chain drivers (104, 106 and 108). Adjustment of the middle flight (42b) relative to the other outer divided flights (42a or 42c) allow different sized cartons to be incorporated, as illustrated in FIG. 8. The separation between each carton (45) is a very small distance, thus creating most efficient use of space between flights and allowing a rapid movement of product because of minimal dead space between the cartons (45). The divided flight members (42a - 42c) may be staggered at any required interval as desired to accommodate a different number of cans in different sized cartons. Preferably, divided flights (42a and 42b) are adjustable across the framework table (12) whereas divided flights (42c) are not.

FIG. 8 illustrates four cans (18) in a carton (110) smaller than that shown in FIG. 7, and between staggered flight members (42a - 42c). The divided flights (42a and 42b) have been adjusted across the framework table toward the divided flight (42c). The middle divided flight member (42b), which formerly aligned between flight members (42a and 42c), is advanced to the left thus trailing the divided flight members (42a and 42c) so that the leading surfaces (47) of the divided flight members (42a and 42c) align against the trailing surface of the carton (110), and so that the trailing edge (49) of the single flight (42b) aligns adjacent to the leading edge of a carton (110), thus propelling the carton (110) by the divided flight pair (42a - 42c), along with the single flight (42b), which squares up the carton with regard to the flight pair (42a - 42c).

### MODE OF OPERATION

Where a four-pack is to be produced there can be used, for example, two lanes and two starwheels; each one of the starwheels places two cans into a bucket. The first starwheel puts two cans into the bucket which is "laned over" or "plows over", and then the second starwheel places two or more cans in the bucket, to make the 4-pack.

The 6 pack configuration uses three starwheels and three lanes.

The 8 pack configuration uses all four starwheels and four lanes.

The 9 pack configuration uses three starwheels and three lanes for three cans in each bucket.

The ratio for the starwheel changes so that the starwheel, instead of just running two cans through the bucket, runs three cans to a bucket. There are three cans from each starwheel.

When running a 12 pack configuration, all four starwheels are used, three cans into the bucket.

Various modifications can be made to the present invention without departing from the apparent scope hereof. The teachings of the present invention can be extended to other package configurations such as 12/30 or 24, 36.

The following is a list of the parts or other features referred to above.
- 10: packaging system
- 12: framework table
- 14: framework table
- 16: external conveyor
- 18: product
- 18a: downed can
- 20: first conveyor
- 22a-n: conveyor lanes
- 24a-n: starwheel feeders
- 25: second conveyor
- 26: third bucketed conveyor
- 27a-n: low sensors
- 28: dead plate
- 30: can selector bars
- 30a: beveled end of selector bar
- 31: can selector bars
- 31a-n: sensors
- 32: fourth conveyor
- 33: reject chute
- 34a-n: sensors
- 35a-n: "downed-can" pass-throughs
- 36a-n: loader arms
- 38: horizontal carton hopper
- 40: rotary carton feeder
- 41: unerected cartons
- 42: flights
- 42a-c: divided flight members
- 44: air frame carton erector
- 45: erected cartons
- 46: glue gun system
- 47: leading surface
- 46a-n: glue applicator orifices
- 49: trailing surface
- 48:
- 50: compression discharge belt
- 52: compression discharge belt
- 54a-n: teeth
- 55a-n: curved sides of conveyor lanes
- 56a-n: cutouts
- 58: central drive shaft
- 60a-d: sprockets
- 62a-d: chains
- 64a-d: sprockets
- 66a-d: angle drives
- 68a-d: shafts
- 70: clutch
- 72: clutch
- 74: drive shaft
- 76: sprocket
- 78: sprocket
- 80: chain
- 82: chain
- 84: sprocket
- 86: sprocket
- 90: bucket
- 92: bottom
- 94: side
- 96: side
- 98: end
- 100: open end
- 102: chain
- 104: chain drive
- 106: chain drive
- 108: chain drive
- 110: small carton

## Claims

1. A method of packaging articles (18) to produce packs each containing a plurality of the articles, characterised in that the method comprises:
(a) providing a plurality of streams (22a- 22n) of the articles;
(b) directing the streams at pre-determined speeds to a consolidation zone (26);
(c) in the consolidation zone consolidating the streams into a consolidated stream of articles;
(d) dividing the consolidated stream into a plurality of batches of said articles, each batch containing the number of articles required in the intended pack; and
(e) securing the batches in packaging material (45).

2. A packaging system comprising:
a. a plurality of conveyor lane means (22a - 22n);
b. means for moving containers (18) in said conveyor lane means;
c. a plurality of starwheel means (24a - 24n) for moving said containers towards selector bar means (30, 31);
d. bucket means (90) for receiving cans from said selector bars; and
e. loader arm means (36a - 36n) for loading said containers into a sleeve (45) from said bucket means.

3. Apparatus suitable for use in the method of Claim 1, characterised in that the apparatus comprises:
a conveyor (20) for said plurality of streams of articles (18);
a plurality of feeders (24a - 24n) to feed said streams at a pre-determined speed;
consolidation means (26, 90) to form said streams into a consolidated stream;
divider means (30, 31) to divide the consolidated stream into a plurality of batches of the articles; and
securement means (36, 90) to secure the respective batches as the desired packs.

4. Apparatus according to Claim 3, wherein the plurality of streams are substantially parallel to one another and their direction of flow is oblique to the direction of motion of said conveyor.

5. Apparatus according to Claim 3 or 4, wherein the feeders comprise starwheels.

6. Apparatus according to Claim 3, 4 or 5, wherein said consolidation means comprises a conveyor (26) having a plurality of like buckets, trays or other receptacles (90) for said articles, each receptacle having dimensions such that it can receive a respective one of said batches of articles.

7. Apparatus according to Claim 6, wherein each receptacle can receive said respective batch in a configuration which corresponds to the desired configuration of the intended pack.

8. Apparatus according to any of Claims 2 to 7, wherein said divider means comprises a plurality of elongate members substantially parallel to one another and disposed such that they can intrude into the consolidated stream of articles thereby to divide it into said batches.

9. Apparatus according to any of Claims 2 to 8, wherein the securement means comprises means (36) successively to bring said batches of articles together with a plurality of cartons, sleeves, boxes, holders or other pieces of packaging material (45) so that each batch can be releasably attached to a respective one of said pieces of packaging material.

10. Apparatus according to any of Claims 2 to 9, which is adjustable to produce two or more different sizes and/or configurations of packs, wherein one or more of the feeders can be rendered inoperative thereby to reduce the number of said streams of articles fed to the consolidation means.
